# EUROPÄISCHE PATENTSCHRIFT

(11) **EP 3 536 446 B1**
(45) Veröffentlichungstag und Bekanntmachung des Hinweises auf die Patenterteilung: **13.09.2023**
(21) Anmeldenummer: 19159246.8
(22) Anmeldetag: 26.02.2019
(51) Int. Cl.: B23P 19/02, B23P 11/02, B25B 27/02, B25B 27/04, B23P 19/027, F01D 5/02

(54) **HYDRAULISCHES AUSPRESSWERKZEUG MIT INTEGRIERTER INDUKTIONSVORRICHTUNG**
HYDRAULIC PRESSING TOOL WITH INTEGRATED INDUCTION DEVICE
OUTIL D'EXPRESSION HYDRAULIQUE POURVU DE DISPOSITIF D'INDUCTION INTÉGRÉ

(30) Priorität: 06.03.2018 DE 102018203274
(43) Veröffentlichungstag der Anmeldung: 11.09.2019
(73) Patentinhaber: MTU Aero Engines AG, 80995 München (DE)
(72) Erfinder: Cerovsky, Florian, 82467 Garmisch-Partenkirchen (DE)

(56) Entgegenhaltungen:
- CN-A- 101 284 354
- CN-A- 106 563 917
- JP-A- H0 852 622
- RU-A- 2008 124 496
- RU-C2- 2 388 584
- US-A- 4 167 809
- US-A- 4 570 053
- US-A1- 2012 167 388
- DATABASE WPI Week 198718 Thomson Scientific, London, GB; AN 1987-127901 XP002792306, -& SU 1 256 948 A (WAGON PLAN DES TECH) 15. September 1986 (1986-09-15)

## Beschreibung

Die vorliegende Erfindung betrifft ein hydraulisches Auspresswerkzeug nach dem Oberbegriff des Anspruchs 1 und ein Verfahren zum Auspressen einer Rotorwelle aus einer Struktur einer Turbomaschine, die an der Rotorwelle mittels einer Presspassung befestigt ist.

Strukturen von Turbomaschinen sind üblicherweise mittels Presspassungen an einer Struktur einer Rotorwelle der Turbomaschine befestigt. Die Struktur kann zum Beispiel die Form einer Scheibe haben, in der eine Durchgangsbohrung ausgebildet ist. Zwischen einem Innendurchmesser der Durchgangsbohrung und einem Außendurchmesser der Rotorwelle ist die Presspassung vorgesehen. Um die Scheibe von der Rotorwelle zu lösen, wurde bisher ein herkömmliches Auspresswerkzeug verwendet. Als nachteilig hat es sich erwiesen, dass beim Auspressen sowohl die Rotorwelle als auch die Scheibe beschädigt werden können, da die Presspassungen sehr eng toleriert sind.

Es wurde in Erwägung gezogen, den Innendurchmesser der Scheibe mittels einer Heizvorrichtung zu erwärmen, damit sich die Scheibe ausdehnt und die Rotorwelle leichter herausgezogen werden kann. Dabei wurde jedoch auch die Rotorwelle erwärmt, so dass sich dieses Verfahren als nicht zweckmäßig erwiesen hat. Erschwerend kommt hinzu, dass das bisherige Auspresswerkzeug keinen geeigneten Zugang für derartige Heizvorrichtungen bietet.

Es sind Heizvorrichtungen in Gestalt von Induktionsvorrichtungen bekannt, die zum Beispiel zum Montieren oder Herauspressen von Wälzlagern verwendet werden. Beispiele hierfür finden sich in den Katalogen WL 80 100/3 DA *"FAG Montage von Wälzlagern* "und WL 80 250/4 DA *"FAG Geräte und Dienstleistungenfür Montage und Wartung von Wälzlagern* ", die von der Schäffler Gruppe herausgegeben wurden. Dabei werden die Wälzlager vor der Montage auf Heizplatten oder um induktiv beheizte Bügel gelegt. Zur Demontage kann eine induktiv beheizte Trommel verwendet werden, die um das zu demontierende Wälzlager herum angeordnet wird. Beispiele für bekannte Auspressvorrichtungen mit separaten Induktionsspulen finden sich bspw. in den Druckschriften CN 101284354 A, CN 106563917 A, JP 408052622 A, RU 2388584 C2, SU 1256948 A1, US 4167809 A1, US 4570053 A1 und US 2012/0167388 A1. Die CN 106563917 A offenbart ein hydraulisches Auspresswerkzeug zum Auspressen einer Rotorwelle für eine Turbomaschine nach dem Oberbegriff des Anspruchs 1.

Eine Aufgabe einer Ausführung der vorliegenden Erfindung ist es, das hydraulische Auspressen einer Rotorwelle aus einer Struktur einer Turbomaschine zu verbessern. Diese Aufgabe wird durch ein hydraulisches Auspresswerkzeug zum Auspressen einer Rotorwelle aus einer Turbomaschine mit den Merkmalen des Anspruchs 1 bzw. durch ein Verfahren zum hydraulischen Auspressen einer Rotorwelle aus einer Turbomaschine mit den Merkmalen des Anspruchs 7 gelöst. Vorteilhafte Ausführungsformen der Erfindung sind Gegenstand der Unteransprüche.

Ein Aspekt der vorliegenden Erfindung betrifft ein hydraulisches Auspresswerkzeug zum Auspressen einer Rotorwelle aus einer Turbomaschine, wobei die Turbomaschine eine Struktur aufweist, die an der Rotorwelle mittels einer Presspassung befestigt ist. Das hydraulische Auspresswerkzeug hat ein erstes Werkzeug, das dazu konfiguriert ist, an einer ersten Seite der Struktur angeordnet zu werden, und das eine Kopplungseinrichtung aufweist, die dazu konfiguriert ist, das erste Werkzeug so mit der Struktur zu koppeln, dass sie zumindest in einer Richtung entlang einer Achse der Rotorwelle nicht relativ zueinander bewegbar sind; und zumindest eine in dem ersten Werkzeug integrierte Induktionsvorrichtung, die dazu konfiguriert ist, die Struktur im Bereich der Presspassung mittels Induktion zu erwärmen; wobei das erste Werkzeug einen, insbesondere hydraulisch betätigten, Aktuator aufweist, der dazu konfiguriert ist, in einem Montagezustand, in dem das erste Werkzeug mit der Struktur gekoppelt ist, die Rotorwelle gegen die Presspassung aus der Struktur zu drücken oder zu ziehen. Durch diese Konfiguration ist es möglich, die Induktionswärme gezielt auf die Presspassung zu leiten, ohne dass die Rotorwelle wesentlich erwärmt wird. Infolgedessen kann die Rotorwelle aus der Struktur herausgepresst werden, ohne dass eine Beschädigung der Struktur oder der Rotorwelle verursacht wird. Vorzugsweise hat das hydraulische Auspresswerkzeug ein zweites Werkzeug, das dazu konfiguriert ist, an einer zweiten Seite der Struktur angeordnet zu werden, die der ersten Seite entgegengesetzt ist; wobei die Induktionsvorrichtung in dem zweiten Werkzeug integriert ist. Vorzugsweise ist eine weitere Induktionsvorrichtung auch in dem ersten Werkzeug integriert. Auf diese Weise kann das hydraulische Auspresswerkzeug kompakt dimensioniert werden, und die Induktionswärme kann noch direkter zu der Presspassung geleitet werden.

Vorzugsweise weist die Kopplungseinrichtung mehrere, insbesondere drei oder mehr, Verbindungseinrichtungen wie beispielsweise Bolzen und einen Ring auf, wobei der Ring an der zweiten Seite der Struktur angeordnet ist, und die Verbindungseinrichtungen an dem ersten Werkzeug gekoppelt sind und im Montagezustand in komplementäre Öffnungen eintreten, die in dem Ring ausgebildet sind.

Vorzugsweise ist das erste Werkzeug dazu konfiguriert, an so die Struktur angeordnet zu werden, dass eine Ebene vorhanden ist, die senkrecht zur Achse der Rotorwelle steht und sowohl den Bereich der Presspassung als auch das erste Werkzeug schneidet.

Vorzugsweise ist die Induktionsvorrichtung dazu konfiguriert, im Montagezustand bezüglich der Achse der Rotorwelle radial außerhalb des Bereichs der Presspassung so positioniert zu sein, dass eine Ebene vorhanden ist, die senkrecht zur Achse der Rotorwelle steht und sowohl den Bereich der Presspassung als auch die Induktionsvorrichtung schneidet. Vorzugsweise weisen das erste und/oder das zweite Werkzeug jeweils zylindrische Abschnitte auf, in denen die jeweilige Induktionsvorrichtung angeordnet ist. Dadurch ist es möglich, dass die Induktionswärme direkt in den Bereich der Presspassung geleitet werden kann.

Ein weiterer Aspekt der vorliegenden Erfindung betrifft ein Verfahren zum hydraulischen Auspressen einer Rotorwelle aus einer Turbomaschine, wobei die Turbomaschine eine Struktur aufweist, in der die Rotorwelle mittels einer Presspassung befestigt ist. Das Verfahren umfasst Schritte zum Anordnen eines ersten Werkzeugs an einer ersten Seite der Struktur; Koppeln des ersten Werkzeugs mit der Struktur derart, dass sie zumindest in einer Richtung entlang einer Achse der Rotorwelle nicht relativ zueinander bewegbar sind; Anordnen zumindest einer Induktionsvorrichtung im Bereich der Presspassung; Aufbringen eines, insbesondere hydraulischen, Drucks auf einen Aktuator derart, dass die Rotorwelle gegen die Presspassung aus der Struktur gedrückt oder gezogen wird; gleichzeitiges Erwärmen der Struktur in einem Bereich der Presspassung mittels Induktion durch die Induktionsvorrichtung. Vorzugsweise wird ein konstant hoher Druck durch den Aktuator aufgebracht, und gleichzeitig erfolgt die Erwärmung durch die Induktionsvorrichtung. Sobald sich die Presspassung infolge der Erwärmung erweitert hat, springt die Rotorwelle aus der Struktur. Durch dieses Verfahren kann die Rotorwelle schneller als beim Stand der Technik aus der Struktur herausgepresst werden, da das Herausdrücken und das Erwärmen gleichzeitig erfolgen und keine unnötigen Abkühlphasen auftreten.

Vorzugsweise umfasst der Schritt zum Anordnen des ersten Werkzeugs einen Schritt zum Zentrieren des ersten Werkzeugs.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:

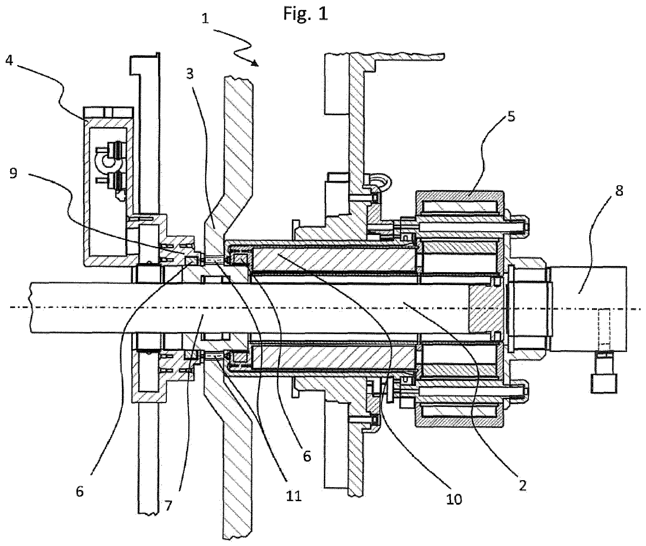

- Fig. 1: eine schematische Darstellung eines hydraulischen Auspresswerkzeugs nach einer Ausführung der vorliegenden Erfindung.

Fig. 1 zeigt eine schematische Darstellung eines hydraulischen Auspresswerkzeugs 1 nach einer Ausführung der vorliegenden Erfindung. Das hydraulische Auspresswerkzeug 1 dient zum hydraulischen Auspressen einer Rotorwelle 2 aus einer Turbomaschine, wobei die Turbomaschine eine Struktur 3 aufweist, in der die Rotorwelle 2 mittels einer Presspassung befestigt ist. Die Rotorwelle 2 kann in einer Turbomaschine, insbesondere einer Gasturbine, insbesondere einem Flugtriebwerk eingebaut sein.

Im dargestellten Ausführungsbeispiel handelt es sich bei der Turbomaschine um eine Niederdruckturbine. Die Niederdruckturbine umfasst einen mehrstufigen Turbinenrotor, welcher mit Rotorschaufeln beschaufelte Laufscheiben umfasst, die bezüglich einer Achse eines Turbinenrotors axial bzw. in Strömungsrichtung betrachtet hintereinander angeordnet sind und an der Rotorwelle 2 mittels der Presspassung angebracht sind. Die Laufscheiben stellen ein Beispiel der Struktur 3 gemäß der vorliegenden Erfindung dar, in der die Rotorwelle 2 mittels der Presspassung befestigt ist.

Das hydraulische Auspresswerkzeug 1 hat ein erstes Werkzeug 5, das dazu konfiguriert ist, an einer ersten Seite der Struktur 3 vollständig oder teilweise um die Rotorwelle 2 angeordnet zu werden. Das hydraulische Auspresswerkzeug 1 hat ferner ein zweites Werkzeug 4, das dazu konfiguriert ist, vollständig oder teilweise um die Rotorwelle 2 an einer zweiten Seite der Struktur 3 angeordnet zu werden, die der ersten Seite entgegengesetzt ist.

Das hydraulische Auspresswerkzeug 1 hat eine Kopplungseinrichtung 11, 12, die mehrere Verbindungseinrichtungen 11 wie beispielsweise Bolzen und einen Ring 12 aufweist, wobei der Ring 12 an der zweiten Seite der Struktur 3 angeordnet ist und die Verbindungseinrichtungen 11 an dem ersten Werkzeug 5 gekoppelt sind und im Montagezustand in komplementäre Öffnungen eintreten, die in dem Ring 12 ausgebildet sind. Die Verbindungseinrichtungen 11 treten dabei auch durch axiale Durchgangsbohrungen hindurch, die in der Struktur 3 ausgebildet sind. Damit sind das erste Werkzeug 5 und die Struktur 3 so miteinander gekoppelt, dass sie zumindest in einer Richtung entlang einer Achse der Rotorwelle 2 nicht relativ zueinander bewegbar sind. In der Fig. 1 können das erste Werkzeug 5 und die Struktur 3 nicht voneinander weg bewegt werden. Die Kopplungseinrichtung 11, 12 kann ferner mehrere Zentriereinrichtungen wie zum Beispiel drei oder mehrere Zentrierstifte (nicht gezeigt) aufweisen, durch die das erste Werkzeug 5 zentriert werden kann.

Das erste und das zweite Werkzeug 5, 4 weisen jeweils eine Induktionsvorrichtung 6 auf, die dazu konfiguriert ist, die Struktur 3 im Bereich 7 der Presspassung mittels Induktion zu erwärmen. Die Induktionsvorrichtungen 6 sind durch eine oder mehrere elektrische Induktionsspulen gebildet. Die Induktionsspulen können so ausgebildet sein, dass sie die Rotorwelle 2 vollständig umlaufen. Alternativ können die Induktionsspulen aus mehreren, in Umfangsrichtung angeordneten Spulensegmenten ausgebildet sein. Die Induktionsvorrichtungen 6 sind jeweils in dem ersten und dem zweiten Werkzeug 5, 4 integriert. Insbesondere weisen das erste und das zweite Werkzeug 5, 4 jeweils zylindrische Abschnitte 10, 9 auf, in denen sich die Induktionsvorrichtung 6 befinden. In der Fig. 1 ist gezeigt, dass die Induktionsvorrichtungen 6 an einem jeweiligen distalen Ende der zylindrischen Abschnitte 10, 9 so angeordnet sind, dass sie sich einander gegenüberliegen. Dadurch können die Induktionsvorrichtungen 6 im ersten und zweiten Werkzeug 5, 4 optimal an vorbestimmte Layouts von bestehenden Turbomaschinen angepasst werden.

Die Induktionsvorrichtungen 6 sind dazu konfiguriert, bezüglich der Achse der Rotorwelle 2 radial außerhalb des Bereichs 7 der Presspassung so positioniert werden zu können, dass Ebenen vorhanden sind, die senkrecht zur Achse der Rotorwelle 2 stehen und sowohl den Bereich 7 der Presspassung als auch die Induktionsvorrichtungen 6 schneiden. Dadurch befinden sich die Induktionsvorrichtungen 6 in der Nähe der Presspassung und können die Induktionswärme gezielt dorthin leiten.

In der Fig. 1 ist ferner gezeigt, dass das erste Werkzeug 5 dazu konfiguriert ist, an die Struktur 3 so angeordnet zu werden, dass eine Ebene vorhanden ist, die senkrecht zur Achse der Rotorwelle 2 steht und sowohl den Bereich 7 der Presspassung als auch das erste Werkzeug 5 schneidet. Dabei sollte der radiale Abstand zwischen der Verbindungseinrichtung und der Presspassung möglichst klein sein. Dadurch können Kippmomente minimiert werden, die auf die Struktur 3 wirken könnten, wenn die Rotorwelle 2 herausgedrückt wird.

Das erste Werkzeug 5 weist einen hydraulisch betätigten Aktuator 8 auf, der dazu konfiguriert ist, in einem Montagezustand, in dem das erste Werkzeug 5 mit der Struktur 3 gekoppelt ist, die Rotorwelle 2 gegen die Presspassung aus der Struktur 3 zu drücken. Sobald die Induktionsvorrichtungen 6 den Bereich 7 der Presspassung ausreichend erwärmt haben und die Presspassung aufgeweitet wurde, springt die Rotorwelle 2 aus der Struktur 3.

Der Betrieb des hydraulischen Auspresswerkzeugs 1 ist folgendermaßen. In einem ersten Schritt wird das erste Werkzeug 5 um die Rotorwelle 2 an der ersten Seite der Struktur 3 angeordnet. Das zweite Werkzeug 4 wird um die Rotorwelle 2 an der zweiten Seite der Struktur 3 angeordnet, die der ersten Seite entgegengesetzt ist.

Im nächsten Schritt werden das erste Werkzeug 5 und die Struktur 3 derart aneinander gekoppelt, dass das erste Werkzeug 5 entlang der Achse der Rotorwelle 2 (in der Fig. 1 nach rechts) nicht weg bewegbar ist. Dabei werden die Bolzen 11 in die komplementären Öffnungen des Rings 12 geschraubt. Gleichzeitig können das erste und/oder das zweite Werkzeug 5, 4 durch die (nicht gezeigten) Zentrierstifte aneinander zentriert werden. Diese Funktion kann alternativ durch die Kopplungseinrichtung 11 und insbesondere von deren Verbindungseinrichtungen wie im Ausführungsbeispiel von den Bolzen 11 verwirklicht sein.

Im nächsten Schritt wird ein hydraulischer Druck auf einen Aktuator 8 derart aufgebracht, dass die Rotorwelle 2 gegen die Presspassung aus der Struktur 3 gedrückt werden soll. Dabei drückt der Aktuator 8 die Rotorwelle 2 gemäß der Fig. 1 nach links, während gleichzeitig die Kopplungseinrichtung 11, 12 eine gemäß der Fig. 1 nach rechts gerichtete Reaktionskraft auf die Struktur 3 aufbringt. Gleichzeitig wird die Struktur 3 in einem Bereich 7 der Presspassung mittels Induktion durch die in den Werkzeugen 5, 4 integrierten Induktionsvorrichtungen 6 erwärmt. Sobald die Struktur 3 im Bereich 7 der Presspassung ausreichend erwärmt ist und sich dort radial ausgedehnt hat, springt die Rotorwelle 2 aus der Struktur 3 heraus. Durch dieses Verfahren können unnötige Abkühlzeiten vermieden werden, so dass das erfindungsgemäße Verfahren im Vergleich mit dem Stand der Technik schneller durchgeführt werden kann.

Da durch die integrierten Induktionsvorrichtungen 6 die Induktionswärme gezielt in die Struktur 3 im Bereich 7 der Presspassung geleitet werden kann, kann eine Beschädigung sowohl der Struktur 3 als auch der Rotorwelle 2 verhindert werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt

### Bezugszeichenliste

- 1: Hydraulisches Auspresswerkzeug
- 2: Rotorwelle
- 3: Struktur
- 5: erstes Werkzeug
- 4: zweites Werkzeug
- 6: Induktionsvorrichtung
- 7: Bereich der Presspassung
- 8: Aktuator
- 9: zylindrischer Abschnitt
- 10: zylindrischer Abschnitt
- 11: Verbindungseinrichtung
- 12: Ring

## Patentansprüche

1. Hydraulisches Auspresswerkzeug (1) zum Auspressen einer Rotorwelle (2) für eine Turbomaschine, wobei die Turbomaschine eine Struktur (3) aufweist, die an der Rotorwelle (2) mittels einer Presspassung befestigt ist
und wobei ein erstes Werkzeug (5), das dazu konfiguriert ist, an einer ersten Seite der Struktur (3) angeordnet zu werden, und das eine Kopplungseinrichtung (11, 12) aufweist, die dazu konfiguriert ist, das erste Werkzeug (5) so mit der Struktur (3) zu koppeln, dass sie zumindest in einer Richtung entlang einer Achse der Rotorwelle (2) nicht relativ zueinander bewegbar sind; und
zumindest eine Induktionsvorrichtung (6), die dazu konfiguriert ist, die Struktur (3) im Bereich (7) der Presspassung mittels Induktion zu erwärmen;
wobei das erste Werkzeug (5) einen hydraulisch betätigten Aktuator (8) aufweist, der dazu konfiguriert ist, in einem Montagezustand, in dem das erste Werkzeug (5) mit der Struktur (3) gekoppelt ist, die Rotorwelle (2) gegen die Presspassung aus der Struktur (3) zu drücken oder zu ziehen, **dadurch gekennzeichnet, das s**
die Induktionsvorrichtung (6) in dem ersten Werkzeug (5) integriert ist.

2. Hydraulisches Auspresswerkzeug (1) nach Anspruch 1, **gekennzeichnet durch** ein zweites Werkzeug (4), das dazu konfiguriert ist, an einer zweiten Seite der Struktur (3) angeordnet zu werden, die der ersten Seite entgegengesetzt ist; wobei die Induktionsvorrichtung (6) in dem zweiten Werkzeug (4) integriert ist.

3. Hydraulisches Auspresswerkzeug (1) nach einem der vorhergehenden Ansprüche, **dadurch gekennzeichnet, dass**
die Kopplungseinrichtung (11, 12) mehrere, insbesondere drei oder mehr, Verbindungseinrichtungen (11) wie beispielsweise Bolzen (11) und einen Ring (12) aufweist, wobei der Ring (12) an der zweiten Seite der Struktur (3) angeordnet ist und die Verbindungseinrichtungen (11) an dem ersten Werkzeug (5) gekoppelt sind und im Montagezustand in komplementäre Öffnungen eintreten, die in dem Ring (12) ausgebildet sind.

4. Hydraulisches Auspresswerkzeug (1) nach einem der vorhergehenden Ansprüche, **dadurch gekennzeichnet, dass**
das erste Werkzeug (5) dazu konfiguriert ist, so an die Struktur (3) angeordnet zu werden, dass eine Ebene vorhanden ist, die senkrecht zur Achse der Rotorwelle (2) steht und sowohl den Bereich (7) der Presspassung als auch das erste Werkzeug (5) schneidet.

5. Hydraulisches Auspresswerkzeug (1) nach einem der vorhergehenden Ansprüche, **dadurch gekennzeichnet, dass**
die Induktionsvorrichtung (6) dazu konfiguriert ist, im Montagezustand bezüglich der Achse der Rotorwelle (2) radial außerhalb des Bereichs (7) der Presspassung so positioniert zu sein, dass eine Ebene vorhanden ist, die senkrecht zur Achse der Rotorwelle (2) steht und sowohl den Bereich (7) der Presspassung als auch die Induktionsvorrichtung (6) schneidet.

6. Hydraulisches Auspresswerkzeug (1) nach einem der vorhergehenden Ansprüche 2 bis 5, **dadurch gekennzeichnet, dass**
das erste und/oder das zweite Werkzeug (5, 4) jeweils zylindrische Abschnitte (10, 9) aufweisen, in denen die jeweilige Induktionsvorrichtung (6) angeordnet ist.

7. Verfahren zum hydraulischen Auspressen einer Rotorwelle (2) aus einer Turbomaschine, wobei die Turbomaschine eine Struktur (3) aufweist, in der die Rotorwelle (2) mittels einer Presspassung befestigt ist, **gekennzeichnet durch** die folgenden Schritte:
Anordnen eines ersten Werkzeugs (5) mit einer integrierten Induktionsvorrichtung (6) an einer ersten Seite der Struktur (3);
Koppeln des ersten Werkzeugs (5) mit der Struktur (3) derart, dass sie zumindest in einer Richtung entlang einer Achse der Rotorwelle (2) nicht relativ zueinander bewegbar sind;
Anordnen zumindest einer Induktionsvorrichtung (6) im Bereich (7) der Presspassung;
Aufbringen eines Drucks auf einen Aktuator (8) derart, dass die Rotorwelle (2) gegen die Presspassung aus der Struktur (3) gedrückt oder gezogen wird; und
gleichzeitiges Erwärmen der Struktur in einem Bereich (7) der Presspassung mittels Induktion durch die Induktionsvorrichtung (6).

8. Verfahren zum hydraulischen Auspressen einer Rotorwelle (2) aus einer Turbomaschine nach Anspruch 7, wobei das Anordnen des ersten Werkzeugs (5) ein Zentrieren des ersten Werkzeugs (5) umfasst.

## Claims

1. Hydraulic ejection tool (1) for ejecting a rotor shaft (2) for a turbomachine, the turbomachine having a structure (3) which is fastened to the rotor shaft (2) by means of a press fit,
and a first tool (5), which is designed to be arranged on a first side of the structure (3) and has a coupling device (11, 12) designed to couple the first tool (5) to the structure (3) such that they are not movable relative to one another at least in a direction along an axis of the rotor shaft (2); and
at least one induction device (6), which is designed to heat the structure (3) in the region (7) of the press fit by means of induction;
the first tool (5) having a hydraulically actuated actuator (8), which, in an assembled state in which the first tool (5) is coupled to the structure (3), is designed to push or pull the rotor shaft (2) out of the structure (3), counter to the press fit, **characterized in that**
the induction device (6) is integrated in the first tool (5).

2. Hydraulic ejection tool (1) according to claim 1, **characterized by** a second tool (4), which is designed to be arranged on a second side of the structure (3) which is opposite the first side; the induction device (6) being integrated in the second tool (4).

3. Hydraulic ejection tool (1) according to any of the preceding claims, **characterized in that**
the coupling device (11, 12) has a plurality of, in particular three or more, connecting devices (11), for example bolts (11) and a ring (12), the ring (12) being arranged on the second side of the structure (3) and the connecting devices (11) being coupled to the first tool (5) and, in the assembled state, entering complementary openings which are formed in the ring (12).

4. Hydraulic ejection tool (1) according to any of the preceding claims, **characterized in that**
the first tool (5) is designed to be arranged on the structure (3) such that there is a plane which is perpendicular to the axis of the rotor shaft (2) and intersects both the region (7) of the press fit and the first tool (5).

5. Hydraulic ejection tool (1) according to any of the preceding claims, **characterized in that**
in the assembled state, the induction device (6) is designed to be positioned relative to the axis of the rotor shaft (2) radially outside the region (7) of the press fit such that there is a plane which is perpendicular to the axis of the rotor shaft (2) and intersects both the region (7) of the press fit and the induction device (6).

6. Hydraulic ejection tool (1) according to any of the preceding claims 2 to 5, **characterized in that**
the first and/or the second tool (5, 4) each have cylindrical portions (10, 9) in which the respective induction device (6) is arranged.

7. Method for hydraulically ejecting a rotor shaft (2) out of a turbomachine, the turbomachine having a structure (3) in which the rotor shaft (2) is fastened by means of a press fit, **characterized by** the following steps:
arranging a first tool (5) together with an integrated induction device (6) on a first side of the structure (3);
coupling the first tool (5) to the structure (3) such that they are not movable relative to each other at least in a direction along an axis of the rotor shaft (2);
arranging at least one induction device (6) in the region (7) of the press fit;
applying a pressure to an actuator (8) such that the rotor shaft (2) is pushed or pulled out of the structure (3) counter to the press fit; and simultaneously heating the structure in a region (7) of the press fit by means of induction by the induction device (6).

8. Method for hydraulically ejecting a rotor shaft (2) out of a turbomachine according to claim 7, wherein arranging the first tool (5) comprises centering the first tool (5).

## Revendications

1. Outil d'extraction hydraulique (1) permettant l'extraction d'un arbre de rotor (2) pour une turbomachine, la turbomachine présentant une structure (3) fixée à l'arbre de rotor (2) à l'aide d'un ajustement serré
et un premier outil (5) étant conçu pour être disposé sur un premier côté de la structure (3) et présentant un appareil d'accouplement (11, 12) conçu pour accoupler le premier outil (5) à la structure (3) de telle sorte qu'ils ne peuvent pas être déplacés l'un par rapport à l'autre au moins dans une direction le long d'un axe de l'arbre de rotor (2) ; et
au moins un dispositif d'induction (6) conçu pour chauffer par induction la structure (3) dans la zone (7) de l'ajustement serré ;
le premier outil (5) présentant un actionneur (8) à commande hydraulique conçu pour pousser ou pour tirer l'arbre de rotor (2) hors de la structure (3) à l'encontre de l'ajustement serré dans un état de montage dans lequel le premier outil (5) est accouplé à la structure (3), **caractérisé en ce que**
le dispositif d'induction (6) est intégré dans le premier outil (5).

2. Outil d'extraction hydraulique (1) selon la revendication 1, **caractérisé par** un second outil (4) conçu pour être disposé sur un second côté de la structure (3) opposé au premier côté ; le dispositif d'induction (6) étant intégré dans le second outil (4).

3. Outil d'extraction hydraulique (1) selon l'une des revendications précédentes, **caractérisé en ce que**
l'appareil d'accouplement (11, 12) présente plusieurs, en particulier au moins trois ou plus, appareils de raccordement (11) tels que par exemple des boulons (11) et une bague (12), la bague (12) étant disposée sur le second côté de la structure (3) et les appareils de raccordement (11) étant accouplés au premier outil (5) et, à l'état de montage, entrant dans des ouvertures complémentaires réalisées dans la bague (12).

4. Outil d'extraction hydraulique (1) selon l'une des revendications précédentes, **caractérisé en ce que**
le premier outil (5) est conçu pour être disposé au niveau de la structure (3) de telle sorte qu'il existe un plan qui est perpendiculaire à l'axe de l'arbre de rotor (2) et qui coupe à la fois la zone (7) de l'ajustement serré et le premier outil (5).

5. Outil d'extraction hydraulique (1) selon l'une des revendications précédentes, **caractérisé en ce que**
le dispositif d'induction (6) est conçu pour être positionné, à l'état de montage, par rapport à l'axe de l'arbre de rotor (2), radialement à l'extérieur de la zone (7) de l'ajustement serré, de telle sorte qu'il existe un plan qui est perpendiculaire à l'axe de l'arbre de rotor (2) et qui coupe à la fois la zone (7) de l'ajustement serré et le dispositif d'induction (6).

6. Outil d'extraction hydraulique (1) selon l'une des revendications 2 à 5 précédentes, **caractérisé en ce que**
le premier et/ou le second outil (5, 4) présentent respectivement des sections cylindriques (10, 9) dans lesquelles le dispositif d'induction (6) respectif est disposé.

7. Procédé permettant l'extraction hydraulique d'un arbre de rotor (2) d'une turbomachine, la turbomachine présentant une structure (3) dans laquelle l'arbre de rotor (2) est fixé à l'aide d'un ajustement serré, **caractérisé par** les étapes suivantes :
disposition d'un premier outil (5) comportant un dispositif d'induction (6) intégré sur un premier côté de la structure (3) ;
accouplement du premier outil (5) à la structure (3) de telle sorte qu'ils ne peuvent pas être déplacés l'un par rapport à l'autre au moins dans une direction le long d'un axe de l'arbre de rotor (2) ;
disposition d'au moins un dispositif d'induction (6) dans la zone (7) de l'ajustement serré ;
application d'une pression sur un actionneur (8) de telle sorte que l'arbre de rotor (2) est poussé ou tiré hors de la structure (3) à l'encontre de l'ajustement serré ; et
chauffage simultané de la structure dans une zone (7) de l'ajustement serré par induction par le dispositif d'induction (6).

8. Procédé permettant l'extraction hydraulique d'un arbre de rotor (2) d'une turbomachine selon la revendication 7, la disposition du premier outil (5) comprenant un centrage du premier outil (5).
